# EUROPÄISCHE PATENTSCHRIFT

(11) **EP 1 442 203 B1**
(45) Veröffentlichungstag und Bekanntmachung des Hinweises auf die Patenterteilung: **24.05.2006**
(21) Anmeldenummer: 02802240.8
(22) Anmeldetag: 30.10.2002
(51) Int. Cl.: F02C 7/18, F01K 23/10, F02C 7/143

(54) **VERFAHREN ZUR STEUERUNG DER KÜHLLUFTMASSENSTRÖME EINER GASTURBOGRUPPE**
METHOD FOR CONTROLLING THE COOLING AIR MASS FLOWS OF A GAS TURBINE GROUP
PROCEDE DE REGULATION DES DEBITS MASSIQUES D'AIR DE REFROIDISSEMENT D'UN ENSEMBLE TURBINE A GAZ

(30) Priorität: 02.11.2001 CH 1201401
(43) Veröffentlichungstag der Anmeldung: 04.08.2004
(73) Patentinhaber: Alstom Technology Ltd, 5400 Baden (CH)
(72) Erfinder: HOFFMANN, Jürgen, CH-5417 Untersiggenthal (CH); ROFKA, Stefan, CH-5415 Nussbaumen (CH); WÄLCHLI, René, CH-5013 Niedergösgen (CH)
(86) Internationale Anmeldenummer: PCT/IB2002/004520
(87) Internationale Veröffentlichungsnummer: WO 2003/038255

(56) Entgegenhaltungen:
- EP-A- 0 684 369
- DE-A- 19 639 623
- US-A- 4 767 259
- US-A- 5 996 331
- US-A- 6 161 385
- US-B1- 6 250 064
- PATENT ABSTRACTS OF JAPAN vol. 004, no. 164 (M-041), 14. November 1980 (1980-11-14) & JP 55 112826 A (HITACHI LTD), 1. September 1980 (1980-09-01)

## Beschreibung

### Technisches Gebiet

Die Erfindung betrifft ein Verfahren gemäss dem Oberbegriff des Anspruchs 1.

### Stand der Technik

Die Zwischenkühlung im Verdichter von Gasturbogruppen ist eine wohlbekannte Massnahme, welche zur Erhöhung des Wirkungsgrades und der Leistung einer Gasturbogruppe wesentlich beizutragen vermag, insbesondere dann, wenn die dem teilverdichteten Arbeitsmittel entnommene Wärme an einer Stelle der Kraftwerksanlage nutzbringend verwendbar ist. EP 516 995 schlägt diesbezüglich vor, die Verdichterluft durch einen Dampferzeuger zu leiten, und so eine Dampfmenge zu erzeugen, welche im Wasser-Dampf-Kreislauf einer Kombianlage weiter verwendbar ist. EP 781 909 und EP 898 645 schlagen vor, die Luft am Verdichtereintritt mit Wasser zu übersättigen, so, dass ein binäres Luft-Wasser-Wasserdampf-Gemisch in den Verdichter eintritt. Die sukzessive Verdampfung der in den Verdichter eingebrachten Wassertröpfchen führt zu einer intensiven Innenkühlung des Verdichters; der entstehende Wasserdampf wird in der Turbine der Gasturbogruppe unter Leistungsabgabe entspannt.

Neben einer signifikanten Reduktion der Leistungsaufnahme des Verdichters ergibt sich schon aus einer einfachen Überlegung zur Stufenkinematik des Verdichters, dass die Zwischenkühlung weiterhin zu einer Verschiebung des Druckaufbaus in die hinteren Verdichterstufen führt. Der Artikel "Wet Compression: Gas Turbine Power Output Enhancement for Peak-Load Demand", Siemens Power Journal 1/2000, S. 29-32, führt hierzu aus, dass dies zu einem Ungleichgewicht zwischen den Verdichter-Anzapfdrücken für die Kühlluft, und den hierzu korrespondierenden Turbinendrücken komme. Es wird einerseits vorgeschlagen, die zur Kühlluft-Massenstromeinstellung im Kühlsystem eingebauten Blenden entsprechend anzupassen. Alternativ wird vorgeschlagen, ein automatisches Kühlluftregelsystem vorzusehen.

Im Hinblick auf die erste vorgeschlagene Variante ist hierzu festzustellen, dass diese im Betrieb ohne Verdichterkühlung zu einem Kühlluftmassenstrom führt, der weit über dem erforderlichen liegt, was die Leistungs- und Wirkungsgradpotenziale der Gasturbogruppe deutlich einschränkt. Im Hinblick auf die zweite vorgeschlagene Variante ist festzustellen, dass die Schrift keinen Hinweis darauf gibt, wie ein solches Kontrollsystem zu realisieren wäre.

### Darstellung der Erfindung

Der vorliegenden Erfindung liegt die Aufgabe zugrunde, ein Verfahren zur Regelung der Kühlluftversorgung einer Gasturbogruppe anzugeben, welche die Nachteile des Standes der Technik vermeidet.

Erreicht wird dies durch die Gesamtheit der Merkmale des Anspruchs 1.

Kern der Erfindung ist also, das Kühlsystem einer Gasturbine einerseits mit geeigneten Mitteln zu versehen, welche eine gezielte externe Einflussnahme auf die dort strömenden Kühlluftmassenströme ermöglichen, und diese Mittel in Abhängigkeit von einer geeigneten Betriebskenngrösse zu steuern. Diese Betriebskenngrösse beinhaltet in einer Ausführungsform, welche insbesondere bei variabler Verdichterkühlung Anwendung findet, in erster Linie Grössen, welche die Druckverteilung und die Massenströme im Kühlluftsystem respektive um das Kühlluftsystem massgeblich beeinflussen oder unmittelbar wiedergeben. Die Betriebskenngösse kann weiterhin Grössen enthalten, welche ein Mass für die Heissgastemperatur im Bereich der zu kühlenden Komponenten, oder für die Materialtemperaturen kritischer Komponenten, liefern. Beides kann auch in geeigneter Weise kombiniert werden.

Aus der EP 1 028 230 ist bekannt, über eine im Kühlluftsystem integrierte Blendenmessstelle den Kühlluftmassenstrom zu bestimmen, und eine verstellbare Drosselstelle auf einen Sollmassenstrom zu regeln. Es zeigt sich jedoch gerade beim Betrieb mit starker Kühlung der Strömung im Verdichter, dass eine Steuerung in Abhängigkeit vom Kühluftmassenstrom alleine nicht unter allen Umständen ein bestes Ergebnis liefert.

Eine Vorzugsvariante der Erfindung besteht darin, den Kühlluftmassenstrom auf den Verdichter-Eintrittsmassenstrom zu beziehen. Dabei kann weiterhin auch die Kühlleistung im Verdichter als Mass für die Verschiebung des Druckaufbaus in geeigneter und von den spezifischen Gegebenheiten des Verdichters abhängiger Weise berücksichtigt werden.

Die Kühlleistung im Verdichter kann unter anderem und auf besonders einfache Weise dadurch bestimmt werden, dass die Temperaturdifferenz über einen Zwischenkühler erfasst wird.

Die Kühlleistung kann beispielsweise auch dadurch berücksichtigt werden, dass aus den Umgebungsbedingungen, also Umgebungstemperatur, -druck und -feuchte, sowie einer stromauf des Verdichtereintritts in die Zuströmung eingebrachten Wassermenge eine Übersättigung der Ansaugluft berechnet wird.

Wenn innerhalb des Verdichters Wasser zur Verdunstungskühlung eingebracht wird, kann auch diese Wassermenge als Massstab für die Kühlleistung herangezogen werden.

Diese Kühlleistung kann alleine oder in Kombination mit anderen Grössen zur Bildung der Betriebskenngrösse herangezogen werden.

Wenn in diesem Rahmen davon gesprochen wird, wie die Betriebskenngrösse zu ermitteln sei, bedeutet dies keineswegs, dass ausser den ausdrücklich genannten Grössen nicht auch noch andere Grössen in die Berechnung der Betriebskenngrösse eingehen können.

Eine weitere Grösse, welche bei der Bildung der Betriebskenngrösse zu berücksichtigen ist, ist die Stellung von gegebenenfalls angeordneten Verdichterleitreihen und / oder einer verstellbaren Vorleitreihe. Letzteres ist insbesondere bei der Berechnung eines Verdichter-Eintrittsmassenstromes von Bedeutung.

Eine weitere Möglichkeit zur Bildung der Betriebskenngrösse, welche im Allgemeinen leicht zugänglich ist, ist, den Kühlluft-Vordruck, also den Druck im Verdichter an der Stelle der Kühlluft-Abzweigung, mit dem Verdichterenddruck oder mit einem sonstigen Druck, welcher einen Anhaltswert für den Austrittsdruck der Kühlluft liefert, ins Verhältnis zu setzen. Auch dieses Verhältnis kann alleine oder in Kombination mit anderen Grössen zur Bildung der erfindungsgemäss relevanten Betriebskenngrösse herangezogen werden.

Weiterhin kann auch der Brennkammer-Druckverlust zur Bildung der verfahrensrelevanten Betriebskenngrösse herangezogen werden.

Die Aufzählung möglicher Kombinationen zur Bildung einer Betriebskenngrösse zur Steuerung des Kühlluftmassenstroms ist nicht abschliessend zu verstehen; abhängig von den konkreten Gegebenheiten, wobei insbesondere die Verdichterkennlinie, die Stelle der Kühlluftentnahme, und die Art einer gegebenenfalls realisierten Verdichterkühlung zu berücksichtigen sind, wird der Fachmann selbstverständlich ohne Weiteres auch andere Grössen als relevant erkennen, und bei der Bildung der Betriebskenngrösse berücksichtigen.

Die thermische Belastung der zu kühlenden Komponenten kann durch eine Kenngrösse erfasst werden, welche insbesondere eine Turbineneintrittstemperatur, eine Turbinenaustrittstemperatur, eine Brennstoffmenge, einen Luftmassenstrom, und/oder den Verdichterenddruck, alleine oder in Kombination untereinander oder mit anderen Grössen erfasst.

Eine vorteilhafte Ausführungsform kann darin gesehen werden, eine auf an sich bekannte Weise ermittelte Turbineneintrittstemperatur mit einem Verdichterenddruck zu multiplizieren und auf einen Kühlluftvordruck zu beziehen, wobei maschinenspezifische multiplikative Faktoren und Exponenten für die einzelnen Grössen zu verwenden sind.

Für die Bildung der Betriebskenngrösse wird im konkreten Fall auch die vorhandene Instrumentierung und die messtechnische Zugänglichkeit einer Gasturbogruppe entscheidend sein.

Der Kühlluftmassenstrom kann eingestellt werden, indem entweder auf die Strömung unmittelbar in den Kühlluftkanälen Einfluss genommen wird, oder, indem auf einen eine Drosselstelle einer Kühlluftleitung des Kühlluftsystems umgehenden Bypass Einfluss genommen wird. Dabei kann die Einflussnahme erfolgen, indem eine variable Drosselung vorgesehen wird, oder, indem Mittel zur Verstärkung der Strömung mit einer verstellbaren Antriebskraft vorgesehen werden. Letzteres erfolgt zum Beispiel und mit Vorteil, indem eine Treibmittelzuströmung zu auf die Kühlluftleitung oder den Bypass wirkenden Ejektoren verstellt wird.

Schliesslich kann stromab einer in der Kühlluftleitung angeordneten Drosselstelle eine Zufuhr eines Zusatzfluides, wie beispielsweise einer aus einem Abhitzedampferzeuger entnommenen Dampfmenge, abhängig von der gewählten Betriebskenngrösse gesteuert werden.

Bei einer Gasturbine, welche über ein Hochdruckkühlsystem und wenigstens ein Kühlsystem wenigstens einer niedrigeren Druckstufe, hierin nachfolgend als Hochdruck- und Niederdruckkühlsystem bezeichnet, verfügt, wird die Erfindung insbesondere im Niederdruckkühlsystem realisiert. Vor allem dann, wenn die Gasturbine mit veränderlicher Verdichterkühlung betrieben wird, variieren die Druckverhältnisse im Niederdruckkühlsystem, welches ja mit Luft versorgt wird, die aus einer zwischengeordneten Verdichterstufe entnommen wird, stark, weshalb eine externe Einflussnahme auf den Kühlluftmassenstrom im Niederdruckkühlsystem besonders vorteilhaft ist.

Eine erfindungsgemäss gebildete Betriebskenngrösse kann weiterhin auch zur Steuerung der in DE 199 07 907 vorgeschlagenen variablen Verdichterleitreihe Anwendung finden, wodurch letzten Endes ebenfalls auf die Kühlluftmenge Einfluss genommen wird.

### Kurze Beschreibung der Zeichnung

Die Erfindung wird nachfolgend anhand von in der Zeichnung illustrierten Beispielen näher erläutert. Zur Verdeutlichung der Bildung der erfindungsrelevanten Betriebskenngrösse wurden aus Gründen der Übersichtlichkeit nur einfache Parameterkombinationen gewählt; der Allgemeine Fall erschliesst sich in diesem Lichte ohne Weiteres. Für das Verständnis der Erfindung im Zusammenhang mit einem Ausführungsbeispiel nicht notwendige Details sind in der jeweiligen Figur weggelassen worden. Im Einzelnen zeigen
- Figur 1 eine Ausführung der Erfindung an einer konventionellen Gasturbogruppe, mit einer Brennkammer und einer Kühlluftanspeisung, wobei die Gasturbogruppe in eine Kombianlage integriert ist;
- Figur 2 eine Ausführungsform der Erfindung an einer Gasturbogruppe mit sequentieller Verbrennung und Zwischenkühlung im Verdichter;
- Figur 3 ein Figur 2 sehr ähnliches Ausführungsbeispiel, mit variabler Kühlluftbypassdrosselung;
- Figur 4 eine mögliche Realisierung der Erfindung an einer Gasturbogruppe mit sequentieller Verbrennung und Verdichter-Einspritzzwischenkühlung, und Steuerung eines Bypass-Ejektors;
- Figur 5 ein weiteres Beispiel für die Ausführung der Erfindung.

Die Ausführungsbeispiele und Figuren sind nur instruktiv und nicht die Erfindung einschränkend zu verstehen.

### Weg zur Ausführung der Erfindung

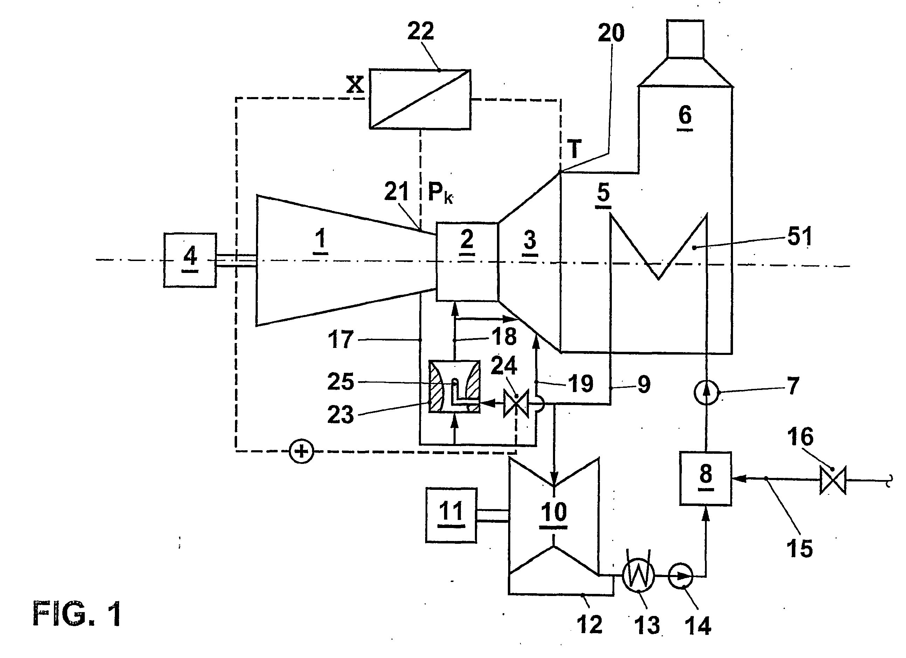

In dem in Figur 1 dargestellten Beispiel ist eine in einer Kombianlage integrierte Gasturbogruppe gemäss einer Ausführungsform der Erfindung dargestellt. Ein Verdichter 1 verdichtet Luft auf einen Druck, und fördert diese in eine Brennkammer 2. In der Brennkammer wird ein Brennstoff in der verdichteten Luft verbrannt. Die entstehenden heissen Rauchgase durchströmen eine Turbine 3, wobei sie eine Leistung abgeben, welche zum Antrieb des Verdichters und eines externen Wellenleistungsverbrauchers, wie eines Generators 4, dient. Die entspannten Rauchgase, welche sich immer noch auf hoher Temperatur befinden, durchströmen einen Abhitzedampferzeuger 5, und erhitzen und verdampfen dort über Heizflächen 51 einen dort strömenden Speisewassermassenstrom, bevor sie über einen Kamin 6 in die Atmosphäre abströmen. Wasser-Dampf-seitig fördert eine Speisepumpe 7 einen Wassermassenstrom aus einem Behälter 8 in den Wärmetauscher 51, wo dieses Wasser verdampft und der entstehende Dampf überhitzt wird. Frischdampf 9 strömt zu einer zweiflutigen Dampfturbine 10, wo der Dampf entspannt wird. Die Dampfturbine treibt einen Generator 11 an. Der entspannte Dampf 12 strömt in einen Kondensator 13. Das verflüssigte Wasser wird über eine Kondensatpumpe 14 wieder in den Behälter 8 gefördert. Der Behälter 8 verfügt weiterhin über eine Zufuhrleitung für Zusatzwasser 15, um allfällige Verluste auszugleichen. Die Zusatzwasserzufuhr ist über ein Stellorgan 16 einstellbar. Dieser Wasser-Dampf-Kreislauf ist sehr vereinfacht dargestellt; der Fachmann kennt die möglichen Ausführungsformen, die aber im Einzelnen nicht erfindungsrelevant sind. Die Brennkammer 2 und die Turbine 3 der Gasturbogruppe sind hohen thermischen Belastungen ausgesetzt. Die Gasturbogruppe ist daher mit einem Kühlsystem 17 versehen, über welches Kühlluft von den Endstufen des Verdichters zu den thermisch hochbelasteten Komponenten der Gasturbogruppe strömt. Das Kühlluftsystem 17 verzweigt in einen ersten Ast 18, über den die Brennkammer und die erste Turbinenleitreihe oder die erste Turbinenstufe gekühlt werden, und einen zweiten Ast 19, über welchen Kühlluft zu weiteren Turbinenstufen strömt. Die thermische Belastung der Komponenten im Heissgaspfad der Gasturbine schwankt sehr stark in Abhängigkeit von der Heissgastemperatur in der Brennkammer. Die Heissgastemperatur kann in der Praxis nicht unmittelbar in der Brennkammer oder den ersten Turbinenstufen durch eine unmittelbare Messung bestimmt werden. Die dargestellte Gasturbine weisst daher eine Temperaturmessstelle 20 am Turbinenaustritt und eine Druckmessstelle 21 am Verdichteraustritt auf. Die dort gemessenen Grössen pk und T werden in einer Recheneinheit 22 auf geeignete Weise miteinander kombiniert, und daraus eine Betriebskenngrösse X gebildet, welche beispielsweise die Turbineneintrittstemperatur repräsentiert. Mit steigender Turbineneintrittstemperatur steigt einerseits die thermische Belastung der Komponenten im Heissgaspfad, andererseits steigt auch der Druck- und Temperaturgradient über die Stufen der Turbine 3 an. In der Folge steigt insbesondere das für den Ast 19 des Kühlsystems zur Verfügung stehende Druckgefälle, so, dass im beispielhaft dargestellten Fall die Steigerung der Heissgastemperatur der zweiten und dritten Turbinenstufe durch einen höheren Kühlluftmassenstrom im Ast 19 in etwa kompensiert wird. Andererseits liegt der Austrittsdruck des Astes 18 des Kühlsystems immer nahe am Verdichterenddruck, während die Heissgastemperatur in diesem Bereich drastisch variieren kann. In diesem Ast 18 ist daher ein Ejektor 23 angeordnet. Über ein Stellorgan 24 kann einer Treibdüse 25 des Ejektors eine variable Menge des Frischdampfes 9 zugeführt werden, wodurch der Ejektor eine variable zusätzliche Kühlluftmenge durch den Ast 18 des Kühlsystems treibt. Das Stellorgan 24 wird in Abhängigkeit von der Betriebskenngrösse X gesteuert, dergestalt, dass bei steigender Turbineneintrittstemperatur das Stellorgan 24 geöffnet wird, und somit die Treibdampfmenge der Treibdüse 25 ansteigt. Diese Ausführungsform der Erfindung lässt sich auch ohne den grossen apparativen Aufwand einer Kombischaltung realisieren, indem nur ein kleiner einfacher Dampferzeuger in den Abgastrakt einer Gasturbine eingebaut wird. Der erforderliche Dampfmassenstrom beträgt typischerweise nur wenige Prozent des Kühlluftmasssenstroms, beispielsweise 2% bis 5%. Da die erforderlichen Drücke des Treibdampfes nicht zu hoch liegen, kann schon bei recht niedriger Dampftemperatur eine ausreichende Überhitzung des Dampfes erreicht werden. Daher kann die Erfindung, in Verbindung mit Dampf als Treibmedium, auch ohne einen Abhitzedampferzeuger realisiert werden, wenn, wie in der DE 100 41 413 vorgeschlagen, Kühlluftkühler als Dampferzeuger ausgeführt sind, oder wenn, wie in die EP 516 995 vorschlägt, die in einem Zwischenkühler des Verdichters abzuführende Wärme zur Dampferzeugung genutzt wird.

Bei der in Figur 1 dargestellten Ausführungsform kann die Regelung der Kühlluft mit Vorteil auch abhängig vom Brennkammerdruckverlust, alleine oder in Kombination mit anderen Grössen, erfolgen.

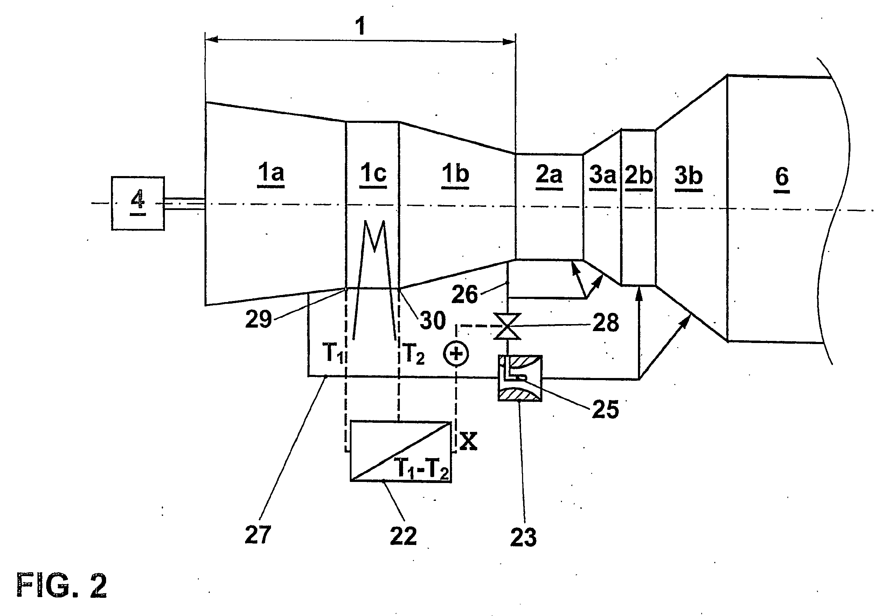

Fig. 2 zeigt eine Gasturbogruppe modernster Bauart mit sequentieller Verbrennung. Eine solche Gasturbogruppe ist aus der EP 620 362 bekanntgeworden. Ein Verdichter 1 verdichtet und fördert Luft auf einen hohen Druck in eine erste Brennkanmmer 2a, in der eine erste Brennstoffmenge verbrannt wird. Das gespannte Rauchgas wird in einer ersten Turbine, Hochdruckturbine, 3a teilentspannt, wobei typischerweise ein Druckverhältnis von 1,5 bis 2 erreicht wird, und strömt mit immer noch hoher Temperatur und hohem Druck in eine zweite Brennkammer 2b ein. Der Sauerstoffgehalt im Rauchgas nach der ersten Brennkammer ist immer noch vergleichsweise hoch, typischerweise bei 15% bis 17%. Daher kann in der zweiten Brennkammer 2b ohne weiteres zusätzlicher Brennstoff zugeführt und verbrannt werden. Das nacherhitzte Heissgas wird in einer Turbine 3b näherungsweise auf Umgebungsdruck entspannt, und strömt in den Abgastrakt 6 ab. Hier kann sich ohne weiteres auch ein nicht dargestellter Abhitzedampferzeuger befinden; Gasturbogruppen mit sequentieller Verbrennung eignen sich prinzipbedingt ganz besonders gut für Anwendungen in Kombianlagen. Bei der Entspannung in den Turbinen 3a und 3b geben die Rauchgase eine Leistung ab, die zum Antrieb des Verdichters 1 und eines Generators 4 dient. Aufgrund des hohen, in einer solchen Gasturbogruppe realisierten Druckverhältnisses ist das Kühlsystem wenigstens zweiteilig, im vorliegend dargestellten Fall mit einem Hochdruckkühlsystem 26 und einem Niederdruckkühlsystem 27, ausgeführt. Das Hochdruckkühlsystem 26 zweigt Luft vom Verdichteraustritt ab, und verwendet diese zur Kühlung der ersten Brennkammer 2a und der Hochdruckturbine 3a. Das Niederdruckkühlsystem 27 zweigt Luft von einer intermediären Verdichterstufe ab, und verwendet diese zur Kühlung der zweiten Brennkammer 2b und der Niederdruckturbine 3b. Diese Zweiteilung des Kühlsystems ermöglicht es, den Hochdruckteil des Heissgaspfades mit Kühlluft eines hohen Druckes zu versorgen, und dabei eine verlustreiche starke Drosselung von Hochdruckkühlluft zur Kühlung der Niederdrucksektion des Heissgaspfades zu vermeiden. Der Verdichter 1 ist in einen ersten Teilverdichter 1a und einen zweiten Teilverdichter 1b unterteilt, zwischen denen ein Zwischenkühler 1c angeordnet ist. Durch den Betrieb des Zwischenkühlers 1c wird die zum Antrieb des Verdichters notwendige Leistung reduziert, wodurch der Wirkungsgrad und die Nutzarbeit der Gasturbogruppe steigen. Dieser Effekt lässt sich auch durch eine Wassereinspritzung in den Verdichter oder eine Übersättigung der Ansaugluft mit Feuchte erreichen, was aufgrund der Verdunstung diese Feuchte eine intensive Innenkühlung des Verdichters bewirkt. Die Kühlung der Luft im Verdichter hat noch eine andere Wirkung: Wie der Fachmann anhand einer einfachen Überlegung zur Stufenkinematik feststellt, wird beim Betrieb mit einer Zwischenkühlung im Verdichter der Druckaufbau in die hinteren Verdichterstufen verlagert. Während der relative Druckabbau über die Turbinenstufen in guter Näherung unverändert bleibt, verschiebt sich der Druckaufbau in den Verdichterstufen deutlich in den zweiten Teilverdichter 1b. Daraus resultiert eine unter Umständen signifikante Verringerung der treibenden Druckdifferenz über das Niederdruckkühlsystem 27, und daraus eine Verminderung des Niederdruck-Kühlluftmassenstromes. Wird das Niederdruck-Kühlsystem 27 so dimensioniert, dass der Kühlluftmassenstrom beim Betrieb mit Kühlung im Verdichter auf jeden Fall ausreichend ist, führt dies beim Betrieb ohne Verdichterkühlung zur einer zwar primär nicht schädlichen Überkühlung des Niederdruck-Heissgaspfades, hier also der Baugruppen 2b und 3b, mit negativen Folgen für Leistung und Wirkungsgrad. Daher ist erfindungsgemäss ein Ejektor 23 im Niederdruckkühlsystem angeordnet, dessen Treibdüse 25 über ein Stellorgan 28 mit dem Hochdruckkühlsystem verbunden ist. Unmittelbar stromauf und stromab des Zwischenkühlers 1c sind eine erste Temperaturmessstelle 29 und eine zweite Temperaturmessstelle 30 angeordnet, an denen eine Temperatur T1 am Eintritt in den Zwischenkühler und eine Temperatur T2 beim Austritt aus dem Zwischenkühler bestimmt werden. Die Recheneinheit 22 berechnet die Temperaturabsenkung T1 - T2, und bildet daraus die Betriebskenngrösse X, welche als Mass für die Kühlungsleistung herangezogen werden kann. Die Betriebskenngrösse X wirkt auf das Stellorgan 28. Mit steigender Kühlungsleistung verschiebt sich der Druckaufbau in den zweiten Teilverdichter 1b, wodurch dem Niederdruckkühlsystem 27 ein geringerer Vordruck zur Verfügung steht. mit steigendem Wert der Betriebskenngrösse X wird daher das Stellorgan 28 gemäss einer vorgegebenen Kennlinie geöffnet, und ein Teilstrom der Hochdruckkühlluft aus dem Hochdruckkühlsystem 26 strömt als Treibmedium zur Treibdüse 25 des Ejektors 23. Dadurch wird der Massenstrom im Niederdruckkühlsystem 27 wieder angehoben. In gewisser Weise wirkt dieses System sogar selbstregelnd: In dem Masse, in dem der Druckaufbau in den zweiten Teilverdichter 1b verlagert wird, steigt das für die Treibmittelströmung des Ejektors zur Verfügung stehende Druckgefälle an, wodurch die Wirkung des Antriebs im Niederdruckkühlsystem selbsttätig unterstützt wird. Die Betriebskenngrösse X, die in diesem Falle ein Mass für eine Kühlungsleistung im Verdichter darstellt, kann durchaus auch aus einem in den Verdichter oder stromauf des Verdichters in dessen Ansaugluft eingebrachten Wassermassenstrom berechnet werden; in letzterem Fall muss dabei ein Massenstrom ermittelt werden, um den die Ansaugluft übersättigt wird. Dieser in flüssigem Aggregatzustand in den Verdichter eingebrachte Wassermassenstrom bestimmt dann im wesentlichen die Kühlungsleistung, und kann damit ebenfalls in sinnvoller Weise als Betriebskenngrösse X Verwendung finden. Ähnlich wie eine Zwischenkühlung kann auch die Verstellung mehrerer Leitreihen eine Verschiebung des Druckaufbaus im Verdichter bewirken, was in Bezug auf die Kühlluftmassenströme ebenfalls durch den Einsatz von eine Druckerhöhung bewirkenden Mitteln, wie Ejektoren, in den Kühlluftkanälen kompensiert werden kann. Selbstverständlich kann die hier dargestellte Ausführungsform der Erfindung ohne weiteres beispielsweise mit einer in Fig. 1 dargestellten Kühlluftmengensteuerung im Hochdruckkühlsystem kombiniert werden.

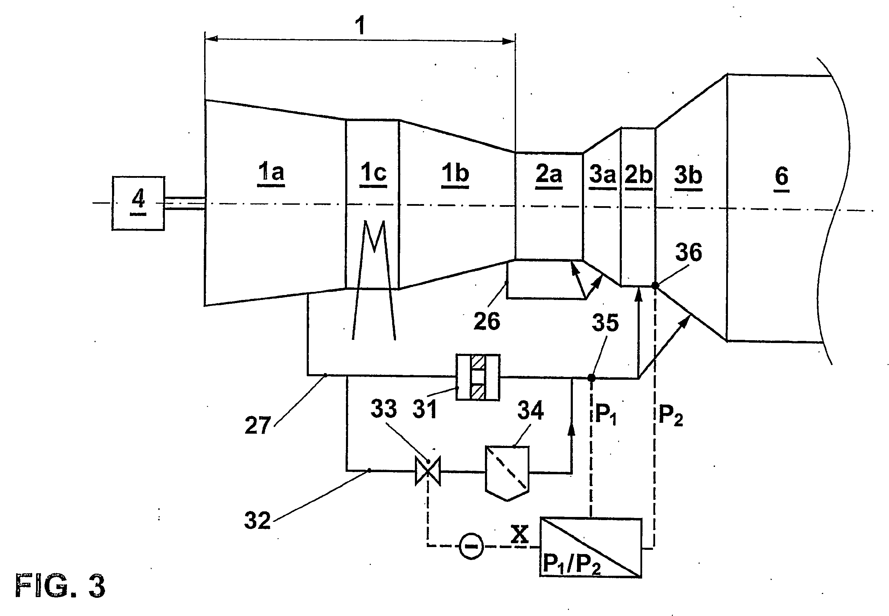

In Figur 3 ist eine weitere Möglichkeit der Einstellung des Kühlluftmassenstroms im Niederdruckkühlsystem dargestellt. Im Niederdruckkühlsystem 27 ist eine Blende 31 als Drosselstelle angeordnet. Eine derartige Drosselstelle zur definierten Einstellung der Kühlluftmassenströme findet sich üblicherweise auch im Hochdruckkühlsystem 26, und in den Kühlsystemen der vorstehend erläuterten Ausführungsformen; dort sind diese Blenden sind allerdings nicht unmittelbar erfindungsrelevant, und daher in den Figuren nicht dargestellt. Eine Bypassleitung 32 zweigt stromauf der Blende 31 aus dem Niederdruckkühlsystem ab, und mündet stromab der Blende wieder in dieses. Dieser Bypasskanal ist im Normalfall so dimensioniert, dass über ihn nur ein Bruchteil der gesamten Kühlluftmenge strömt, der aber ausreicht, um beim Betrieb mit Verdichterkühlung die aus der Verminderung des treibenden Druckgefälles resultierende Minderströmung im Hauptströmungskanal zu kompensieren. Ein solcher Bypasskanal ist typischerweise für Massenströme ausgelegt, welche weniger als 80% des Massenstroms im bygepassten Kanal betragen; insbesondere werden hier Nennmassenströme im Bereich von 20% bis 50% des Hauptmassenstromes erreicht, wobei je nach der erforderlichen Dynamik der Steuerung auch Werte von 10 % und weniger möglich sind. In dem Bypasskanal 32 ist ein Stellorgan 33 angeordnet, um den Bypassstrom variieren zu können. Ein solches Stellorgan liesse sich prinzipiell auch unter Verzicht auf die Bypassleitung unmittelbar im Hauptströmungskanal des Niederdruckkühlsystems 27 anordnen; es resultieren jedoch Vorteile daraus, statt des Hauptstromes nur den im Allgemeinen kleineren Bypassstrom einstellen zu müssen. Ein Sieb 34 fungiert als Rückhaltevorrichtung, und verhindert, dass im Falle eines Bruchs des Stellorgans 33 Trümmer in das Kühlsystem gelangen und es verstopfen. Im Niederdruckkühlsystem ist eine erste Druckmessstelle 35 zur Bestimmung eines ersten Druckes p1, stromauf der Einströmung der Kühlluft in die zu kühlenden Komponenten, angeordnet. Durch eine zweite Druckmessstelle 36 kann beispielsweise ein Druck p2 in der zweiten Brennkammer 2b bestimmt werden. Die von der Recheneinheit 22 als Druckdifferenz p1/p2 bestimmte Kenngrösse X stellt eine gute Vergleichsgrösse für das treibende Druckverhältnis über die Filmkühlbohrungen der zu kühlenden Komponenten dar. In Abhängigkeit von diesem Druckverhältnis wird auf das Stellorgan 33 eingewirkt. Wenn das Druckverhältnis sinkt, wird das Stellorgan 33 weiter geöffnet, was sich in einer Erhöhung des Vordrucks p1 niederschlägt. Auf diese Weise kann das Druckverhältnis der Kühlluft sehr leicht auf einen Sollwert geregelt werden, wobei dieser Sollwert selbstverständlich auch in Abhängigkeit von einer Vielzahl von Maschinenbetriebsdaten, wie beispielsweise der Gasturbinenleistung oder gemessenen Material- und/oder Heissgastemperaturen, vorgegeben sein kann.

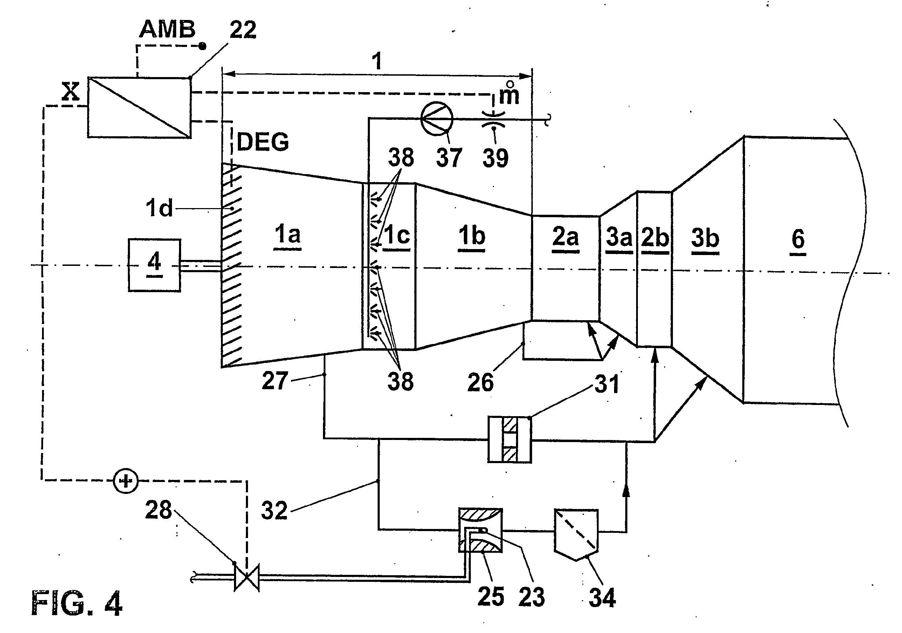

Eine zweite Möglichkeit zur Variation des Bypassstromes ist in Figur 4 dargestellt. Anstelle einer variablen Drosselstelle findet sich in dem Bypasskanal 32 ein Ejektor 23 als Mittel zum variablen Antrieb der Bypassströmung. Das Treibmittel für die Treibdüse 25 des Ejektors ist offengelassen. Als Treibmittel kommt insbesondere ein kleiner Teilstrom der Hochdruckkühlluft in Frage; bei Kombianlagen und anderen Anlagenbauarten mit Dampferzeugern, insbesondere auch dann, wenn Kühlluftkühler oder Verdichter-Zwischenkühler als Dampferzeuger ausgeführt sind, wie es in der DE 100 41 413 respektive der EP 516 995 beschrieben ist, kann eine Dampfmenge als Treibmittel für den Ejektor 23 Verwendung finden. Auch die Versorgung von beliebigen externen Quellen ist prinzipiell möglich, meist aber nicht zweckmässig. Der Treibmittelmassenstrom, damit die vom Ejektor ausgeübte Antriebskraft und der Bypassmassenstrom, sind über das Stellorgan 28 einstellbar. Der Zwischenkühler 1c des Verdichters 1 ist als Einspritzkühler ausgeführt. Eine Pumpe 37 fördert einen Wassermassenstrom unter Druck zu einer Anzahl zwischen Verdichterstufen angeordneter Zerstäuberdüsen, wo dieses Wasser in Form feiner Sprühstrahlen 38 in die teilkomprimierte Luft eingebracht wird. Die Verdampfung des Wassers stromab der Einspritzstelle erwirkt eine Kühlung der Luft im Verdichter. Weiterhin ist eine verstellbare Vorleitreihe 1d des Verdichters eingezeichnet; dass diese in Figur 4 dargestellt ist, in den vorgehenden Figuren jedoch nicht, bedeutet keineswegs, dass diese bei den anderen Ausführungsformen nicht vorhanden wäre. In der hier dargestellten Ausführungsform ist sie jedoch erfindungsrelevant. Das eingebrachte Wasser verdunstet stromab des Kühlers, teilweise auch noch im zweiten Teilverdichter 1b. Die Bestimmung der Kühlleistung über zwei Temperaturmessstellen ist daher nicht ohne weiteres möglich. In der vorliegenden Ausführungsform wird an einer Durchflussmessstelle 39 der Massenstrom m des zur Kühlung verwendeten Wassers bestimmt. In Abhängigkeit von der Stellung DEG der Vorleitreihe 1d und Umgebungszuständen AMB kann der Luftmassenstrom im Verdichter bestimmt werden. Die Recheneinheit 22 bestimmt aus diesen Messwerten eine Betriebskenngrösse X, welche als Verhältnis von Wassermassenstrom und Luftmassenstrom eine Bezugsgrösse für die Kühlleistung darstellt. Je grösser die Kühlleistung ist, desto ausgeprägter ist die Verschiebung des Druckaufbaus im Verdichter. Entsprechend wird mit steigender Betriebskenngrösse X das Stellorgan 28 geöffnet, und damit ein grösserer Bypassmassenstrom über die Bypassleitung 32 getrieben.

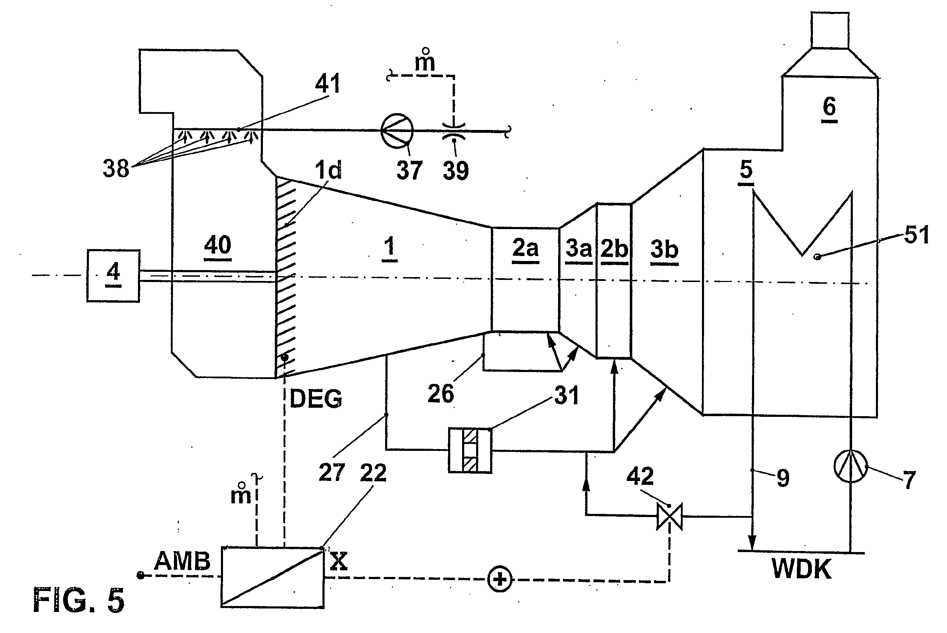

Fig. 5 zeigt eine Gasturbogruppe mit sequentieller Verbrennung, welche in ein Kombikraftwerk integriert ist. Der Verdichter 1 saugt Luft durch einen Ansaugkanal 40 an. Die verdichtete Luft strömt in eine erste Brennkammer 2a ein. Dort erfolgt die Verbrennung einer ersten Brennstoffmenge. Das Heissgas wird in einer ersten Turbine 3a teilentspannt, und strömt in eine zweite Brennkammer 2b ein. Dort wird das Heissgas durch Verbrennung einer zweiten Brennstoffmenge nacherhitzt, und in der Turbine 3b weiter entspannt. Die Leistung der Turbinen 3a und 3b wird zum Antrieb des Verdichters 1 und eines Generators 4 verwendet. Die Turbinen und Brennkammern werden auf die oben beschriebene Weise durch ein Hochdruckkühlsystem 26 und ein Niederdruckkühlsystem 27 gekühlt. Das Heissgas aus der letzten Turbine 3b strömt in einen Abhitzedampferzeuger 5 ein, und erwärmt und verdampft dort über Wärmetauscherflächen 51 einen Wassermassenstrom, den eine Speisepumpe aus einem ansonsten nicht detailliert dargestellten Wasser-Dampf-Kreislauf WDK fördert; der erzeugte Frischdampf 9 wird in den Wasser-Dampf-Kreislauf WDK eingebracht, und treibt dort auf an sich bekannte und nicht erfindungsrelevante Weise eine Dampfturbine an; er könnte ebenso beispielsweise als Prozessdampf Verwendung finden. Das weiter abgekühlte Abgas strömt über einen Kamin 6 in die Atmosphäre aus. Der Verdichter 1 verfügt nicht über einen Zwischenkühler; stattdessen ist im Ansaugkanal 40 der Gasturbogruppe eine Wassereindüsevorrichtung 41 angeordnet, über die ein von einer Pumpe 37 geförderter Wassermassenstrom in Form von Sprühstrahlen 38 in die Ansaugluft eingebracht wird. Dabei kann der Wassermassenstrom so gross gewählt werden, dass Wassertropfen, das heisst Wasser im flüssigen Aggregatzustand, in den Verdichter gelangt. Diese Wassertropfen verdunsten während des Verdichtungsprozesses, und sorgen so für eine intensive Innenkühlung des Verdichters. Ebenso wie bei einer Zwischenkühlung resultiert hieraus eine Verschiebung des Druckaufbaus im Verdichter 1, und damit ein eigentliches Ungleichgewicht der Druckverhältnisse im Niederdruckkühlsystem 27. Zum Ausgleich ist in dieser Ausführungsform stromab der Drosselstelle 31 die Zufuhr von Frischdampf 9 in das Niederdruckkühlsystem vorgesehen. Die Zugeführte Dampfmenge ist über ein Stellorgan 42 variabel. Die Ansteuerung dieses Stellorgans 42 erfolgt in Abhängikeit von einer Betriebskenngrösse X, welche in einer Recheneinheit 22 auf geeignete Weise beispielsweise aus dem Wassermassenstrom m, den Umgebungszuständen AMB und der Vorleitreihenstellung DEG berechnet wird.

Selbstverständlich kann auch eine Gasturbogruppe mit nur eine Brennkammer und nur einer Turbine mit einem Kühlsystem mit zwei oder mehr Druckstufen ausgestattet werden.

In den Kühlluftleitungen können selbstverständlich auch Kühlluftkühler angeordnet sein; insbesondere die Lösungen, welche Ejektoren oder andere steuerbare Mittel zur Druckerhöhung in den Kühlluftleitungen aufweisen, haben dabei den weiteren Vorteil, die Druckverluste der Kühlluftkühler ausgleichen zu können.

Der Fachmann erkennt ohne weiteres, dass sich die dargestellten Ausführungsformen im Rahmen der durch die Ansprüche gekennzeichneten Erfindung nahezu beliebig untereinander kombinieren lassen. Weiterhin erhält er anhand der beschriebenen Bestimmung der Betriebskenngrösse ohne Weiteres die Lehre, auch nicht ausdrücklich genannte Betriebsparameter einer Kraftwerksanlage auf geeignete Weise zu einer Betriebkenngrösse zu kombinieren, und zur Steuerung der Kühlluftversorgung heranzuziehen, ohne den in den Ansprüchen gekennzeichneten Bereich des Erfindungsgegenstandes zu verlassen.

### Bezugszeichenliste

- 1: Verdichter
- 1a: Teilverdichter, Niederdruckverdichter
- 1b: Teilverdichter, Hochdruckverdichter
- 1c: Zwischenkühler
- 1d: verstellbare Vorleitreihe
- 2: Brennkammer
- 2a: erste Brennkammer, Hochdruckbrennkammer
- 2b: zweite Brennkammer, Niederdruckbrennkammer
- 3: Turbine
- 3a: erste Turbine, Hochdruckturbine
- 3b: zweite Turbine, Niederdruckturbine
- 4: Generator
- 5: Abhitzedampferzeuger
- 6: Abgastrakt, Kamin
- 7: Kesselspeisepumpe
- 8: Speisewasserbehälter
- 9: Frischdampf
- 10: Dampfturbine
- 11: Generator
- 12: entspannter Dampf
- 13: Kondensator
- 14: Kondensatpumpe
- 15: Zusatzwasser
- 16: Stellorgan, für Zusatzwasser
- 17: Kühlsystem
- 18: erster Ast des Kühlsystems
- 19: zweiter Ast des Kühlsystems
- 20: Temperaturmessstelle
- 21: Druckmessstelle
- 22: Recheneinheit
- 23: Ejektor
- 24: Stellorgan, für Treibmittel des Ejektors
- 25: Treibdüse
- 26: Hochdruckkühlsystem
- 27: Niederdruckkühlsystem
- 28: Stellorgan, für Treibmittel des Ejektors
- 29: erste Temperaturmessstelle
- 30: zweite Temperaturmessstelle
- 31: Blende
- 32: Bypassleitung
- 33: Stellorgan, für Bypassströmung
- 34: Filter
- 35: erste Druckmessstelle
- 36: zweite Druckmessstelle
- 37: Pumpe
- 38: Sprühstrahlen
- 39: Durchflussmessstelle
- 40: Ansaugkanal
- 41: Einspritzvorrichtung
- 42: Stellorgan, für Dampf
- 51: Wärmetauscherflächen
- AMB: Umgebungsbedingungen
- DEG: Vorleitreihenstellung
- ṁ: Massenstrom
- p: Druck
- p1: erster Druck
- p2: zweiter Druck
- pk: Verdichterenddruck
- T: Temperatur
- T1: erste Temperatur
- T2: zweite Temperatur
- WDK: Wasser-Dampf-Kreislauf
- X: Betriebskenngrösse

## Patentansprüche

1. Verfahren zur Steuerung der Kühlluftmassenströme im Kühlsystem (17, 18, 26, 27) einer Gasturbogruppe (1-4), umfassend die Schritte:
einen Luftmassenstrom in einem Verdichter (1) von einem ersten Druck auf einen zweiten Druck zu verdichten;
den Luftmassenstrom während der Verdichtung von dem ersten Druck auf den zweiten Druck mit einer Kühlungsleistung zu kühlen;
eine Masszahl für die Kühlungsleistung zu ermitteln;
die Masszahl als Eingangsgrösse für die Berechnung einer Betriebskenngrösse (X) heranzuziehen;
ein Kühllftmassenstrom-Stellglied in Abhängigkeit von der Betriebskenngrösse einzustellen.

2. Verfahren gemäss Anspruch 1, **gekennzeichnet durch** die weiteren Schritte, die Kühlungsleistung mittels eines Zwischenkühlers (1c) aufzubringen, die Temperaturdifferenz (T₁, T₂) über den Zwischenkühler zu messen, und die Temperaturdifferenz über den Zwischenkühler als Masszahl für die Kühlungsleistung heranzuziehen, wodurch die Temperaturdifferenz über den Zwischenkühler als Eingangsgrösse für die Berechnung der Betriebskenngrösse herangezogen wird.

3. Verfahren gemäss einem der vorstehenden Ansprüche, **gekennzeichnet durch** die weiteren Schritte, stromauf wenigstens einer Verdichterstufe einen Wassermassenstrom (m) in die Luftströmung der Gasturbogruppe einzubringen, den Wassermassenstrom zu bestimmen, und den Wassermassenstrom als Masszahl für die Kühlungsleistung heranzuziehen, wodurch der Wassermassenstrom als Eingangsgrösse für die Berechnung der Betriebskenngrösse herangezogen wird.

4. Verfahren gemäss Anspruch 3, **gekennzeichnet durch** den weiteren Schritt, den Wassermassenstrom stromauf der ersten Verdichterstufe einzubringen.

5. Verfahren gemäss Anspruch 4, **gekennzeichnet durch** die weiteren Schritte, die Umgebungszustände (AMB), das heisst Druck, Temperatur und Feuchte der Umgebungsluft, zu bestimmen, aus den Umgebungszuständen und dem Wassermassenstrom die Übersättigung der Luft am Verdichtereintritt zu bestimmen, und die Übersättigung als Masszahl für die Kühlungsleistung heranzuziehen, wodurch die Übersättigung als Eingangsgrösse für die Berechnung der Betriebskenngrösse herangezogen wird.

6. Verfahren gemäss einem der vorstehenden Ansprüche, **gekennzeichnet durch** den weiteren Schritt, abhängig von der Betriebskenngrösse den Durchfluss eines als Kühlluftstellglied in einem Strömungsweg des Kühlsystems angeordneten verstellbaren Drosselorgans einzustellen.

7. Verfahren gemäss einem der vorstehenden Ansprüche, **gekennzeichnet durch** die weiteren Schritte, eine Drosselstelle (31) einer Kühlluftleitung (27) mit einer Bypassleitung (32) zu umgehen, ein verstellbares Drosselorgan (33) als Kühlluftstellglied in der Bypassleitung anzuordnen, und den Durchfluss **durch** das Drosselorgan abhängig von der Betriebskenngrösse (X) einzustellen.

8. Verfahren gemäss einem der vorstehenden Ansprüche, **gekennzeichnet durch** die weiteren Schritte, eine Drosselstelle (31) einer Kühlluftleitung (27) mit einer Bypassleitung (32) zu umgehen, einen Ejektor (23) zum Antreiben der Kühlluftströmung in der Bypassleitung als Kühlluftstellglied anzuordnen, den Ejektor mit einem Treibmitte massenstrom zu betreiben, und in Abhängigkeit von der Betriebskenngrösse auf den Treibmittelmassenstrom einzuwirken.

9. Verfahren gemäss einem der vorstehenden Ansprüche, **gekennzeichnet durch** die Schritte, stromab einer Drosselstelle (31) in einer Kühlluftleitung (27) eine Zuführstelle für ein Zusatzfluid als Kühlluftstellglied anzuordnen, an der Zuführstelle ein Zusatzfluid (9) einzubringen, und die Zufuhr des Zusatzfluides abhängig von der Betriebskenngrösse einzustellen.

10. Verfahren gemäss einem der vorstehenden Ansprüche, **gekennzeichnet durch** die weiteren Schritte, einen Ejektor (23) zum Antreiben der Kühlluftströmung in einer Kühlluftleitung (18) als Kühlluftstellglied anzuordnen, den Ejektor mit einem Treibmittelmassenstrom zu betreiben, und in Abhängigkeit von der Betriebskenngrösse auf die Treibmittelzufuhr einzuwirken.

11. Verfahren gemäss einem der vorstehenden Ansprüche, wobei die Gasturbogruppe ein Hochdruckkühlsystem (26) und wenigstens ein Kühlsystem (27) einer niedrigeren Druckstufe umfasst, **dadurch gekennzeichnet, dass** der Kühlluftmassenstrom im Kühlsystem der niedrigeren Druckstufe gesteuert wird.

## Claims

1. Method for controlling the cooling-air mass flows in the cooling system (17, 18, 26, 27) of a gas turbo group (1-4), comprising the steps:
compressing an air mass flow in a compressor (1) from a first pressure to a second pressure;
cooling the air mass flow during compression from the first pressure to the second pressure by means of a cooling power;
determining a dimension number for the cooling power;
using the dimension number as an input variable for calculating an operating characteristic quantity (X);
setting a cooling-air mass flow actuator as a function of the operating characteristic quantity.

2. Method according to Claim 1, **characterized by** the further steps, applying the cooling power by means of an intermediate cooler (1c), measuring the temperature difference (T1, T2) across the intermediate cooler, and using the temperature difference across the intermediate cooler as a dimension number for the cooling power, as a result of which the temperature difference across the intermediate cooler is used as an input variable for calculating the operating characteristic quantity.

3. Method according to one of the preceding claims, **characterized by** the further steps, introducing a water mass flow (*ṁ*) into the air flow of the gas turbo group upstream of at least one compressor stage, determining the water mass flow, and using the water mass flow as a dimension number for the cooling power, as a result of which the water mass flow is used as an input variable for calculating the operating characteristic quantity.

4. Method according to Claim 3, **characterized by** the further step, introducing the water mass flow upstream of the first compressor stage.

5. Method according to Claim 4, **characterized by** the further steps, determining the ambient state (AMB), that is to say the pressure, temperature and moisture of the ambient air, determining the oversaturation of the air at the compressor inlet from the ambient states and the water mass flow, and using the oversaturation as a dimension number for the cooling power, as a result of which the oversaturation is used as an input variable for calculating the operating characteristic quantity.

6. Method according to one of the preceding claims, **characterized by** the further step, setting, as a function of the operating characteristic quantity, the throughflow of an adjustable throttle member arranged as a cooling-air actuator in the flow path of the cooling system.

7. Method according to one of the preceding claims, **characterized by** the further step, bypassing a throttle point (31) of a cooling-air line (27) by means of a bypass line (32), arranging an adjustable throttle member (33) as a cooling-air actuator in the bypass line, and setting the throughflow through the throttle member as a function of the operating characteristic quantity (X).

8. Method according to one of the preceding claims, **characterized by** the further steps, bypassing a throttle point (31) of a cooling-air line (27) by means of a bypass line (32), arranging an ejector (23) for driving the cooling-air flow in the bypass line as a cooling-air actuator, operating the ejector by means of a propellant mass flow, and acting on the propellant mass flow as a function of the operating characteristic quantity.

9. Method according to one of the preceding claims, **characterized by** the steps, arranging a supply point for an additional fluid as a cooling-air actuator downstream of a throttle point (31) in a cooling-air line (27), introducing an additional fluid (9) at the supply point, and setting the supply of the additional fluid as a function of the operating characteristic quantity.

10. Method according to one of the preceding claims, **characterized by** the further steps, arranging an ejector (23) for driving the cooling-air flow in a cooling-air line (18) as a cooling-air actuator, operating the ejector by means of a propellant mass flow, and acting on the propellant supply as a function of the operating characteristic quantity.

11. Method according to one of the preceding claims, the gas turbo group comprising a high-pressure cooling system (26) and at least one cooling system (27) of a lower pressure stage, **characterized in that** the cooling-air mass flow in the cooling system of the lower pressure stage is controlled.

## Revendications

1. Procédé de régulation de débits massiques d'air froid dans le système de refroidissement (17, 18, 26, 27) d'un ensemble turbine à gaz (1-4), comprenant les étapes consistant :
à comprimer un débit massique d'air dans un compresseur (1) d'une première pression à une deuxième pression;
à refroidir le débit massique d'air pendant la compression de la première pression à la deuxième pression, avec une puissance de refroidissement;
à déterminer un chiffre d'indice pour la puissance de refroidissement;
à mettre à contribution le chiffre d'indice en tant que grandeur d'entrée pour le calcul d'une grandeur caractéristique de fonctionnement (X);
à ajuster un organe de réglage du débit massique d'air froid en fonction de la grandeur caractéristique de fonctionnement.

2. Procédé selon la revendication 1, **caractérisé par** les étapes supplémentaires consistant à appliquer la puissance de refroidissement au moyen d'un refroidisseur intermédiaire (1c), à mesurer la différence de température (T1, T2) par l'intermédiaire du refroidisseur intermédiaire, et à mettre à contribution la différence de températures par l'intermédiaire du refroidisseur intermédiaire en tant que chiffre d'indice pour la puissance de refroidissement, la différence de températures par l'intermédiaire du refroidisseur intermédiaire étant mise ainsi à contribution en tant que grandeur d'entrée pour le calcul de la grandeur caractéristique de fonctionnement.

3. Procédé selon l'une quelconque des revendications précédentes, **caractérisé par** les étapes supplémentaires consistant à introduire en amont d'au moins un étage de compresseur, un débit massique d'eau (m) dans le courant d'air de l'ensemble turbine à gaz, à déterminer le débit massique d'eau, et à mettre à contribution le débit massique d'eau en tant que chiffre d'indice pour la puissance de refroidissement, le débit massique d'eau étant ainsi mis à contribution en tant que grandeur d'entrée pour le calcul de la grandeur caractéristique de fonctionnement.

4. Procédé selon la revendication 3, **caractérisé par** l'étape supplémentaire consistant à introduire le débit massique d'eau en amont du premier étage de compresseur.

5. Procédé selon la revendication 4, **caractérisé par** les étapes supplémentaires consistant à déterminer les états ambiants (AMB), à savoir, la pression, la température, et l'humidité de l'air ambiant, à déterminer à partir des états ambiants et du débit massique d'eau, la sursaturation de l'air au niveau de l'entrée du compresseur, et à mettre à contribution la sursaturation en tant que chiffre d'indice pour la puissance de refroidissement, la sursaturation étant ainsi mise à contribution en tant que grandeur d'entrée pour le calcul de la grandeur caractéristique de fonctionnement.

6. Procédé selon l'une quelconque des revendications précédentes, **caractérisé par** l'étape supplémentaire consistant à ajuster en fonction de la grandeur caractéristique de fonctionnement, le débit à travers un organe d'étranglement réglable disposé en tant qu'organe de réglage d'air froid, dans une voie d'écoulement du système de refroidissement.

7. Procédé selon l'une quelconque des revendications précédentes, **caractérisé par** les étapes supplémentaires consistant à contourner une position à étranglement (31) d'une conduite d'air froid (27) par une conduit de dérivation (32), à disposer un organe à étranglement réglable (33) en tant qu'organe de réglage d'air froid dans la conduite de dérivation, et à ajuster le débit à travers l'organe à étranglement en fonction de la grandeur caractéristique de fonctionnement (X).

8. Procédé selon l'une quelconque des revendications précédentes, **caractérisé par** les étapes supplémentaires consistant à contourner une position à étranglement (31) d'une conduite d'air froid (27) par une conduite de dérivation (32), à disposer un éjecteur (23) pour entraîner l'écoulement d'air froid dans la conduite de dérivation, en tant qu'organe de réglage d'air froid, à faire fonctionner l'éjecteur avec un débit massique d'agent propulseur, et à agir sur le débit massique d'agent propulseur en fonction de la grandeur caractéristique de fonctionnement.

9. Procédé selon l'une quelconque des revendications précédentes, **caractérisé par** les étapes consistant à disposer en aval d'une position à étranglement (31) dans une conduite d'air froid (27), une position d'amenée pour un fluide supplémentaire en tant qu'organe de réglage d'air froid, à introduire un fluide supplémentaire (9) au niveau de la position d'amenée et à régler l'amenée du fluide supplémentaire en fonction de la grandeur caractéristique de fonctionnement.

10. Procédé selon l'une quelconque des revendications précédentes, **caractérisé par** les étapes supplémentaires consistant à disposer un éjecteur (23) pour entraîner l'écoulement d'air froid dans une conduite d'air froid (18) en tant qu'organe de réglage d'air froid, à faire fonctionner l'éjecteur avec un débit massique d'agent propulseur, et à agir sur l'amenée d'agent propulseur en fonction de la grandeur caractéristique de fonctionnement.

11. Procédé selon l'une quelconque des revendications précédentes, l'ensemble turbine à gaz comprenant un système de refroidissement haute pression (26) et au moins un système de refroidissement (27) d'un étage de pression plus faible, **caractérisé en ce que** le débit massique d'air froid est commandé dans le système de refroidissement de l'étage de pression plus faible.
